# EUROPÄISCHE PATENTSCHRIFT

(11) **EP 1 223 350 B1**
(45) Veröffentlichungstag und Bekanntmachung des Hinweises auf die Patenterteilung: **30.06.2004**
(21) Anmeldenummer: 02000519.5
(22) Anmeldetag: 09.01.2002
(51) Int. Cl.: F16B 5/06

(54) **Klemmhalter für plattenförmige Bauteile**
Clamping holder for elements in form of a plate
Agraffe pour des éléments en forme de plaque

(30) Priorität: 15.01.2001 DE 20100751 U
(43) Veröffentlichungstag der Anmeldung: 17.07.2002
(73) Patentinhaber: SCHÜCO International KG, 33609 Bielefeld (DE)
(72) Erfinder: Bielefeld, Hans-Walter, 33719 Bielefeld (DE); Münter, Christoph, 32602 Vlotho (DE); Stier, Helge, 33617 Bielefeld (DE)
(74) Vertreter: Specht, Peter, Dipl.-Phys.

(56) Entgegenhaltungen:
- EP-A- 0 178 598
- DE-A- 4 404 653
- DE-B- 1 237 287
- US-A- 3 545 157

## Beschreibung

Die vorliegende Erfindung betrifft einen Klemmhalter für plattenförmige Bauteile, z.B. für Glas- oder Kunststoffscheiben o.dgl., mit zwei einander gegenüberliegenden Klemmschenkeln zum Einklemmen des Bauteiles, wobei an den einander zugewandten Seiten der Klemmschenkel aus elastischem Material gefertigte Dichtungsstreifen angeordnet sind, entsprechend der Merkmale des ersten Teils aus Anspruch 1 (DE 4 404 653 A1).

Klemmhalter der gattungsgemäßen Art für plattenförmige Bauteile sind vielerlei Ausführungsformen bekannt. Derartige Klemmhalter können sowohl für ebene oder auch gewölbte plattenförmige Bauteile Verwendung finden.

Am weitesten verbreitet ist dabei eine Konstruktion, die prinzipiell dadurch gekennzeichnet ist, daß der Klemmhalter aus zwei Klemmbacken besteht, die als einzelne Bauteile durch mindestens eine Schraube miteinander verbunden sind, wobei durch diese Schrauben beide Klemmbacken nicht nur miteinander verbunden sind, sondern auch zur Erzielung einer Klemmwirkung gegen die Außenflächen eines plattenförmigen Bauteiles angezogen werden können.

Das vorstehend genannte, allgemein bekannte Konstruktionsprinzip ist generell mit dem Nachteil behaftet, daß ein derartiger Klemmhalter zwei unabhängig voneinander gefertigte Klemmbacken aufweist, die durch die Schraube oder durch mehrere Schrauben miteinander verbunden werden müssen.

Der vorliegenden Erfindung liegt die Aufgabe zugrunde, einen Klemmhalter der gattiingsgemäßen Art zu schaffen, der sich durch einen einfachen Aufbau und durch hohe Funktionalität auszeichnet.

Diese Aufgabe wird erfindungsgemäß durch die Merkmale des Anspruch 1 gelöst, wobei u. A. der Klemmhalter aus einem einstückig gefertigten, im Querschnitt etwa U-förmigen Haltekörper und einer im Bereich eines Schenkels des Haltekörpers vorgesehenen und durch eine Druckschraube beaufschlagbaren Druckplatte sowie den Dichtungsstreifen besteht, wobei die Druckplatte zwischen dem Schenkel des Haltekörpers und dem Dichtungsstreifen liegt.

Ein derartiger Klemmhalter zeichnet sich durch einen äußerst einfachen und unkomplizierten Aufbau aus. Die Funktionalität eines derartigen Klemmhalters ist auf einfachste Art und Weise gesichert, da die Klemmkräfte auf das zu haltende plattenförmige Bauteil durch eine Druckschraube erzeugt werden, die auf die Druckplatte einwirkt. Durch die Druckplatte mit ihrer verhältnismäßig großen Auflagefläche sind hohe Klemmkräfte erzielbar, ohne daß die Flächenpressung auf das zu haltende plattenförrnige Bauteile unzulässig hoch werden.

Aufgrund der einstückigen Ausbildung des Haltekörpers kann dieser außerdem optisch ansprechend gestaltet werden, insbesondere sind keine störenden und zur Verschmutzung neigenden Trennspalte o.dgl. vorhanden.

Insbesondere unter dem Gesichtspunkt einer einfachen Montage eines derartigen Klemmkörpers ist es vorteilhaft, wenn nach einem weiteren Gedanken der Erfindung die in beiden Schenkeln des Haltekörpers zugeordneten Dichtungsstreifen aus den Seitenschenkeln eines einstückigen und U-förmigen Dichtungseinsatzes bestehen, welcher in den U-förmigen Haltekörper eingesetzt ist.

Der Dichtungseinsatz besteht somit wieder auch nur aus einem einstückigen Bauteil, welches in den U-förmigen Haltekörper eingesetzt ist, so daß bei der Montage des Klemmhalters keine besondere Aufmerksamkeit mehr darauf verwandt werden muß, daß die beiden Dichtungsstreifen ihre ordnungsgemäße Lage einnehmen.

Weitere Merkmale der Erfindung sind Gegenstand weiterer Unteransprüche.

Ausführungsbeispiele der Erfindung sind in den beigefügten Zeichnungen dargestellt und werden im folgenden beschrieben. Es zeigen:
- Figur 1: einen Querschnitt durch einen erfindungsgemäßen Klemmhalter mit einem eingeklemmten, plattenförmigen Bauteil,
- Figur 2: eine perspektivische Sprengbild-Darstellung der Bauteile des Klemmhalters gemäß Figur 1,
- Figur 3: einen Querschnitt durch eine Lamelle einer Beschattungs- und Lichtlenkeinrichtung, bei der ein plattenförmiges Bauteil durch erfindungsgemäße Klemmhalter nach einem weiteren Ausführungsbeispiel der Erfindung gehalten ist,
- Figur 4: einen Klemmhalter gemäß Figur 3 in einer vergrößerten Schnittdarstellung,
- Figur 5: eine perspektivische Sprengbild-Darstellung der Lamelle gemäß Figur 3.

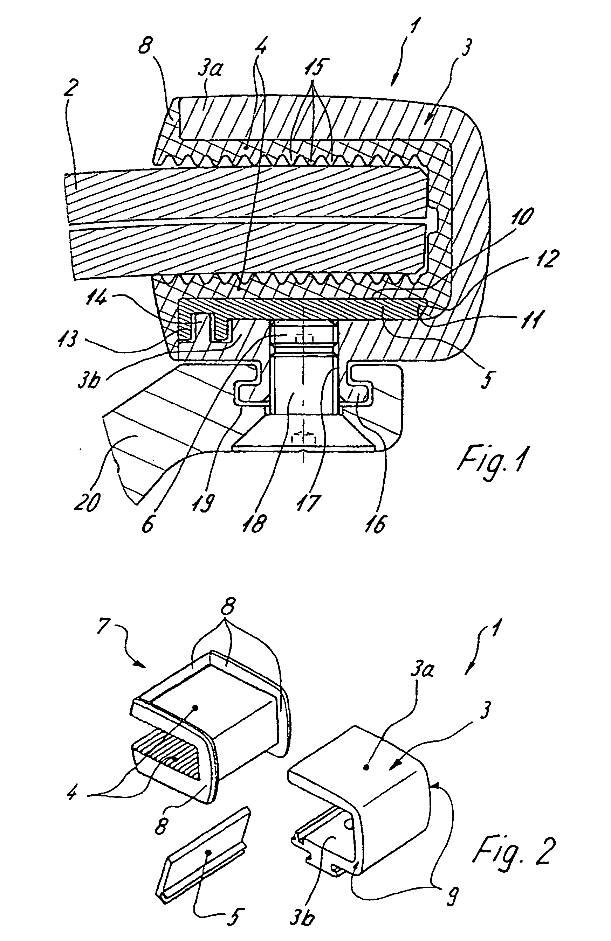

In den Figuren 1 und 2 ist mit dem Bezugszeichen 1 insgesamt ein Klemmhalter für plattenförmige Bauteile 2, z.B. für eine Glas- oder Kunststoffscheibe, aber auch für plattenförmige Bauteile aus anderen, insbesondere bruchempfindlichen Materialien, bezeichnet.

Dieser Klemmhalter 1 besteht im wesentlichen aus einem einstückig gefertigten und im Querschnitt etwa U-förmigen Haltekörper 3, aus an den einander zugewandten Seiten der Klemmschenkel 3a und 3b des Haltekörpers 3 angeordneten Dichtungsstreifen 4 und einer Druckplatte 5, die im dargestellten Ausführungsbeispiel zwischen dem Schenkel 3b des Haltekörpers 3 und dem zugeordneten Dichtungsstreifen 4 liegt. Diese Druckplatte 5 ist über eine Druckschraube 6 beaufschlagbar.

Wie besonders deutlich aus Figur 2 hervorgeht, bestehen die beiden Dichtungsstreifen 4 aus den Seitenschenkeln eines einstückigen und etwas U-förmigen Dichtungseinsatzes 7. Wie ebenfalls aus Figur 2 deutlich hervorgeht, ist dieser Dichtungseinsatz an seinen stirnseitigen Enden mit vollständig umlaufenden, vorstehenden Randstegen 8 versehen, welche die korrespondierenden Stirnflächen 9 des Klemmhalters 3 überdekken oder abdecken, wenn der Dichtungseinsatz 7 in den Klemmhalter 3 eingesetzt ist.

Um die Lage des Dichtungseinsatzes 7 sowie die Lage der Druckplatte 5 gegenüber dem Haltekörper 3 zu fixieren, sind folgende Maßnahmen ergriffen:

Die Druckplatte 5 ist in eine entsprechend ausgeformte Tasche 10 des Dichtstreifens 4 formschlüssig eingesetzt und greift mit einer abgeschrägten Außenkante 11 in eine entsprechende Hinterschneidung 12 an der betreffenden Kante der Tasche 10 ein. An der gegenüberliegenden, im Bereich der offenen Seite der U-förmigen Konstruktion liegenden Vorderseite ist die Druckplatte 5 mit einer Rastnut 13 versehen. Diese Rastnut 13 übergreift einen Raststeg 14 im vorderen Endbereich des Schenkels 3b des Haltekörpers 3.

Durch diese Maßnahmen ist die Druckplatte 5 ebenso wie der Dichtungseinsatz 7 gegenüber dem Haltekörper 3 fixiert, woraus eine besonders einfache Handhabung und Montage des Klemmhalters 1 resultiert. Es brauchen keinerlei Einzelteile zusammengefügt und gegeneinander justiert werden, sondern der Klemmhalter 1 kann als Baueinheit angesehen und benutzt werden.

Über die schon erwähnte Druckschraube 6, die unmittelbar auf die Druckplatte 5 einwirkt, kann ein plattenförmiges Bauteil 2 zwischen den beiden Schenkeln 3a und 3b - genauer gesagt der in diesem Bereich angeordneten Druckplatte 5 - wirkungsvoll eingeklemmt werden, wobei eine Beschädigungsgefahr für das plattenförmige Bauteil 2 praktisch nicht gegeben ist, da der von der Druckschraube 6 erzeugte punktuelle Druck über die Druckplatte 5 großflächig verteilt wird, so daß die Flächenpressung auf das plattenförmige Bauteil 2 entsprechend verringert wird.

Die Dichtungsstreifen 4 sind im Anlagebereich zu einem plattenförmigen Bauteil 2 mit einer Vielzahl von Dichtlippen 5 versehen, was Figur 1 besonders deutlich zeigt.

Beim Ausführungsbeispiel gemäß Figur 1 und 2 ist der Schenkel 3b des Haltekörpers 3 mit einem T-förmigen Anschlußsteg 16 versehen, der eine Gewindebohrung 17 aufweist. Diese Gewindebohrung 17 dient sowohl zur Aufnahme der Druckschraube 6 wie auch zur Aufnahme einer Befestigungsschraube 18, mittels derer der Klemmhalter in einer hinterschnittenen, C-förmigen Nut 19 eines letztendlich beliebigen Bauteiles 20 festgelegt werden kann.

Selbstverständlich kann der Klemmhalter 1 auch mit anderen Verbindungsmitteln versehen sein, um ihn an einem tragenden Bauteil festzulegen.

Aus Stabilitätsgründen ist der Haltekörper 3 aus einem Metallteil hergestellt. Bevorzugt wird der Haltekörper 3 als Abschnitt eines Strangpreßprofils gefertigt.

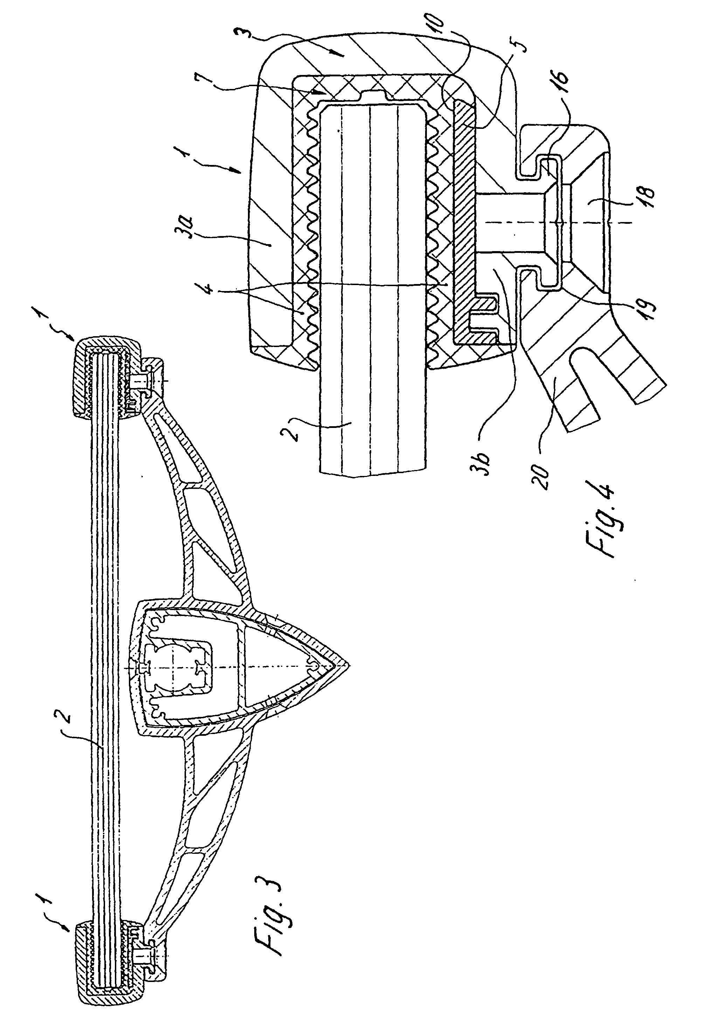

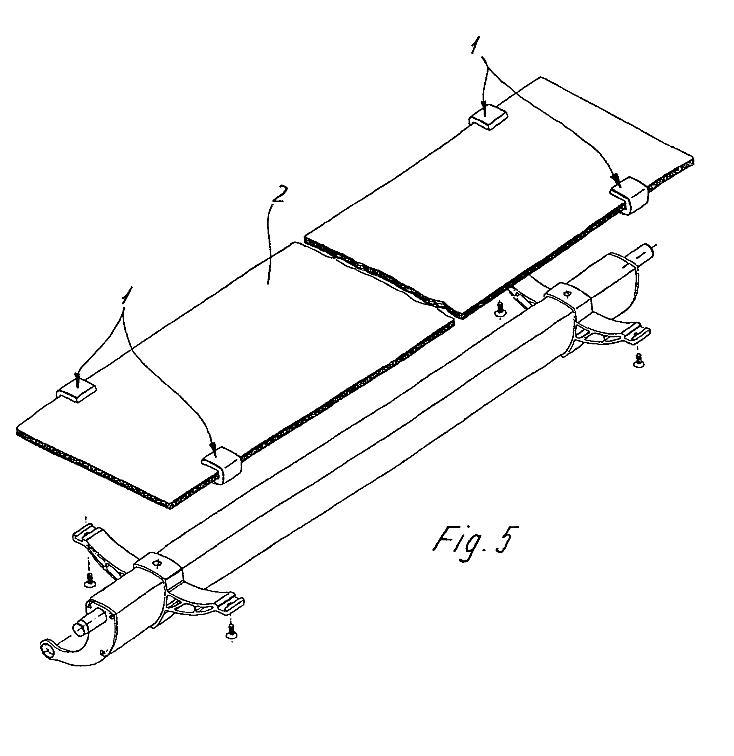

In den Figuren 3 und 4 ist ein Klemmhalter 1 dargestellt, der beispielhaft wieder zum Einklemmen eines plattenförmigen Bauteiles 2 dient, im dargestellten Ausführungsbeispiel nach Figur 3 handelt es sich bei den plattenförmigen Bauteil 2 um einen Lamellenkörper für eine Lamelle einer Beschattungs- und/oder Lichtlenkeinrichtung für Gebäude. Figur 3 zeigt ebenso wie Figur 5 lediglich beispielhaft einen praktischen Anwendungsfall für derartige Klemmhalter 1.

Das Ausführungsbeispiel nach den Figuren 3 und 4 unterscheidet sich vom Ausführungsbeispiel gemäß den Figuren 1 und 2 lediglich dadurch, daß zur Beaufschlagung der Druckplatte 5 die Befestigungsschraube 18 unmittelbar verwendet wird, mittels derer auch der gesamte Klemmhalter 1 an einem tragenden Bauteil 20 befestigt wird. Die ist bei gut abgestimmten Toleranzen zwischen dem T-förmigen Befestigungssteg 16 und der entsprechenden Aufnahmenut 19 des Bauteiles 20 durchaus denkbar.

Die Festlegung des Dichtungseinsatzes 7 sowie der Druckplatte 5 gegenüber dem Haltekörper 3 kann auch abweichend von den dargestellten Ausführungsbeispielen realisiert werden.

So ist es z.B. denkbar, einen der Schenkel 4 des Dichtungseinsatzes 7 über eine Nut-Stegverbindung am Haltekörper 3 zu verankern und die Druckplatte 5 ausschließlich in einer entsprechenden Tasche des betreffenden Schenkels 4 des Dichtungseinsatzes 7 zu halten.

Eine Lagesicherung der Druckplatte 5 gegenüber dem Dichtungseinsatz 7 kann beispielsweise auch dadurch erfolgen, daß der betreffende Schenkel 4 des Dichtungseinsatzes 7 mit einem oder mehreren in Richtung der Druckplatte 5 vorstehenden Nocken ausgestattet ist, während die Druckplatte 5 mit entsprechenden Aussparungen versehen ist, die in einen oder mehrere Nocken des Schenkels 4 eingreifen.

Die vorstehenden Ausführungen sollen lediglich verdeutlichen, daß vielfältige Möglichkeiten bestehen, die drei wesentlichen Bauteile des Klemmhalters 1 (Haltekörper 3, Dichtungseinsatz 7 und Druckplatte 5) lagegerecht zueinander vorzumontieren.

## Patentansprüche

1. Klemmhalter (1) für plattenförmige Bauteile (2), z. B. für Glas- oder Kunststoffscheiben oder dergleichen, mit zwei einander gegenüber liegenden Klemmschenkeln (3a, 3b) zum Einklemmen des Bauteiles (2), wobei an den einander zugewandten Seiten der Klemmschenkel (3a, 3b) aus elastischem Material gefertigte Dichtungsstreifen (4) angeordnet sind und durch eine im Bereich eines Klemmschenkels (3b) vorgesehene Druckschraube (6) eine Druckkraft ausschließlich lotrecht zur Ebene des plattenförmigen Bauteiles (2) auf dieses aufbringbar ist, **dadurch gekennzeichnet, daß** der Klemmhalter (1) aus einem einstückig gefertigten, im Querschnitt etwa U-förmigen Haltekörper (3) und einer im Bereich des die Druckschraube (6) aufweisenden Klemmschenkels (3b) angeordneten und von der Druckschraube (6) beaufschlagbaren Druckplatte (5) sowie aus den Dichtungsstreifen (4) besteht, wobei die Druckplatte (5) zwischen dem Schenkel (3b) des Haltekörpers (3) und dem Dichtungsstreifen (4) liegt und daß die Druckplatte (5) in eine entsprechend ausgeformte Tasche (10) des Dichtungsstreifens (4) eingesetzt ist.

2. Klemmhalter nach Anspruch 1, **dadurch gekennzeichnet, daß** die den beiden Schenkeln (3a, 3b) des Haltekörpers (3) zugeordneten Dichtungsstreifen (4) aus den Seitenschenkeln eines einstückigen und U-förmigen Dichtungseinsatzes (7) bestehen, welcher in den U-förmigen Haltekörper (3) eingesetzt ist.

3. Klemmhalter nach Anspruch 2, **dadurch gekennzeichnet, daß** der Dichtungseinsatz (7) außenseitig mit vollständig umlaufenden Randstegen (8) versehen ist, die die entsprechenden stirnseitigen Flächen (9) des Haltekörpers (3) überdekken.

4. Klemmhalter nach Anspruch 3, **dadurch gekennzeichnet, daß** die Tasche an einem stimseitigen Ende eine Hinterschneidung (12) aufweist, in die eine abgeschrägte Außenkante (11) der Druckplatte (5) eingreift.

5. Klemmhalter nach einem oder mehreren der vorhergehenden Ansprüche, **dadurch gekennzeichnet, daß** die Druckplatte (5) mit einer Rastnut (13) ausgestattet und auf einen Raststeg (14) des Schenkels (3b) des Haltekörpers (3) aufgeschnäppt ist.

6. Klemmhalter nach einem oder mehreren der Ansprüche 1 bis 4, **dadurch gekennzeichnet, daß** zumindest einer der Dichtungsstreifen (4) über Nut-/Steg-Verbindung gegenüber dem Haltekörper (3) festgelegt ist.

7. Klemmhalter nach einem oder mehreren der vorhergehenden Ansprüche, **dadurch gekennzeichnet, daß** als Druckschraube zur Beaufschlagung der Druckplatte (5) eine Befestigungsschraube (18) vorgesehen ist, mittels derer der Klemmhalter (1) insgesamt an einem tragenden Bauteil (20) befestigbar ist.

8. Klemmhalter nach einem oder mehreren der vorhergehenden Ansprüche, **dadurch gekennzeichnet, daß** die Dichtungsstreifen (4) an ihren einem einzuklemmenden Bauteil (2) zugewandten Seiten mit einer Vielzahl von Dichtlippen (15) versehen sind.

9. Klemmhalter nach einem oder mehreren der vorhergehenden Ansprüche, **dadurch gekennzeichnet, daß** der Haltekörper (3) aus einem Abschnitt eines Strangpreßprofiles, vorzugsweise aus Aluminium, besteht.

10. Klemmhalter nach einem oder mehreren der vorhergehenden Ansprüche, **dadurch gekennzeichnet, daß** an einem Schenkel (3b) des Haltekörpers (3) ein T-förmiger Befestigungssteg (16) mit einer diesen Steg (16) durchtretenden Gewindebohrung (17) zur Festlegung des Klemmhalters (1) an einem mit einer entsprechend hinterschnittenen Nut (19) versehenen tragenden Bauteils (20) ausgestattet ist.

## Claims

1. Clamping holder (1) for plate-like components (2), for example for glass or plastic panes or the like, having two mutually opposite clamping limbs (3a, 3b) in which the component (2) is clamped, sealing strips (4) manufactured from elastic material being arranged on the mutually facing sides of the clamping limbs (3a, 3b) and it being possible for a compressive force to be applied to the plate-like component (2) exclusively perpendicularly with respect to the plane thereof by means of a pressing screw (6) provided in the region of one clamping limb (3b), **characterized in that** the clamping holder (1) comprises a retaining body (3), which is manufactured integrally and is approximately U-shaped in cross section, and a pressing plate (5), which is arranged in the region of the clamping limb (3b) which has the pressing screw (6) and can be acted upon by the pressing screw (6), and the sealing strips (4), the pressing plate (5) lying between the limb (3b) of the retaining body (3) and the sealing strip (4), and **in that** the pressing plate (5) is inserted into a correspondingly shaped pocket (10) of the sealing strip (4).

2. Clamping holder according to Claim 1, **characterized in that** the sealing strips (4) assigned to the two limbs (3a, 3b) of the retaining body (3) comprise the side limbs of a single-piece and U-shaped sealing insert (7) which is inserted into the U-shaped retaining body (3).

3. Clamping holder according to Claim 2, **characterized in that** the sealing insert (7) is provided on the outside with completely encircling edge webs (8) which cover the corresponding end-side surfaces (9) of the retaining body (3).

4. Clamping holder according to Claim 3, **characterized in that** the pocket has, at one end on the end side, an undercut (12) in which a bevelled outer edge (11) of the pressing plate (5) engages.

5. Clamping holder according to one or more of the preceding claims, **characterized in that** the pressing plate (5) is provided with a latching groove (13) and is snapped onto a latching web (14) of the limb (3b) of the retaining body (3).

6. Clamping holder according to one or more of Claims 1 to 4, **characterized in that** at least one of the sealing strips (4) is fired in relation to the retaining body (3) via a groove/web connection.

7. Clamping holder according to one or more of the preceding claims, **characterized in that** a fastening screw (18) is provided as the pressing screw for acting upon the pressing plate (5) and can be used to fasten the clamping holder (1) as a whole to a supporting component (20).

8. Clamping holder according to one or more of the preceding claims, **characterized in that** the sealing strips (4) are provided on their sides facing a component (2) to be clamped with a multiplicity of sealing lips (15).

9. Clamping holder according to one or more of the preceding claims, **characterized in that** the retaining body (3) consists of a section of an extruded profile, preferably of aluminium.

10. Clamping holder according to one or more of the preceding claims, **characterized in that** a T-shaped fastening web (16) on one limb (3b) of the retaining body (3) is provided with a threaded hole (17) which passes through this web (16) and is intended for fixing the clamping holder (1) on a supporting component (20) provided with a correspondingly undercut groove (19).

## Revendications

1. Agrafe (1) pour des éléments (2) en forme de plaque, par exemple des panneaux de verre ou de matière plastique ou analogues, avec deux branches (3a, 3b) en vis-à-vis pour serrer l'élément (2), des bandes d'étanchéité (4) fabriquées en matériau élastique étant placées sur les faces en vis-à-vis des branches (3a, 3b) et une force de pression pouvant être exercée sur l'élément (2) en forme de plaque exclusivement verticalement par rapport au plan de celui-ci au moyen d'une vis de pression (6) prévue au niveau d'une branche (3b), **caractérisée en ce que** l'agrafe (1) est composée d'un corps de maintien (3) fabriqué d'un seul tenant et de section approximativement en forme de U, d'une plaque de pression (5) placée dans la partie de la branche (3b) présentant la vis de pression (6) et pouvant être chargée par la vis de pression (5), ainsi que des bandes d'étanchéité (4), la plaque de pression (5) se plaçant entre la branche (3b) du corps de maintien (3) et la bande d'étanchéité (4), et **en ce que** la plaque de pression (5) est insérée dans une poche (10) de forme appropriée de la bande d'étanchéité (4).

2. Agrafe selon la revendication 1, **caractérisée en ce que** les bandes d'étanchéité (4) associées aux deux branches (3a, 3b) du corps de maintien (3) sont composées des branches latérales d'un insert d'étanchéité (7) formé d'un seul tenant et en U, qui est inséré dans le corps de maintien (3) en forme de U.

3. Agrafe selon la revendication 2, **caractérisée en ce que** l'insert d'étanchéité (7) est muni à l'extérieur de barres de bord (8) couvrant toute la périphérie, qui recouvrent les surfaces frontales (9) correspondantes du corps de maintien (3).

4. Agrafe selon la revendication 3, **caractérisée en ce que** la poche présente à une extrémité frontale une contre-dépouille (12) dans laquelle s'engage un bord extérieur coudé (11) de la plaque de pression (5).

5. Agrafe selon une ou plusieurs des revendications précédentes, **caractérisée en ce que** la plaque de pression (5) est pourvue d'une rainure d'encliquetage (13) et est encliquetée sur une barre d'encliquetage (14) de la branche (3b) du corps de maintien (3).

6. Agrafe selon une ou plusieurs des revendications 1 à 4, **caractérisée en ce qu'**au moins l'une des bandes d'étanchéité (4) est immobilisée par une liaison rainure/barre par rapport au corps de maintien (3).

7. Agrafe selon une ou plusieurs des revendications précédentes, **caractérisée en ce que**, comme vis de pression pour exposer la plaque de pression (5), il est prévu une vis de fixation (18), au moyen de laquelle l'agrafe (1) peut être fixée globalement sur un élément porteur (20).

8. Agrafe selon une ou plusieurs des revendications précédentes, **caractérisée en ce que** les bandes d'étanchéité (4) sont munies, sur leurs faces tournées vers un élément (2) à bloquer, d'une pluralité de lèvres d'étanchéité (15).

9. Agrafe selon une ou plusieurs des revendications précédentes, **caractérisée en ce que** le corps de maintien (3) est composé d'une section d'un profité extrudé, de préférence en aluminium.

10. Agrafe selon une ou plusieurs des revendications précédentes, **caractérisée en ce que**, sur une branche 13b) du corps de maintien (3), une barre de fixation (16) en forme de T est munie d'une perçage fileté (17) traversant cette barre (16), afin de fixer l'agrafe (1) sur un élément porteur (20) muni d'une rainure (19) en contre-dépouille correspondante.
